(19) Europäisches Patentamt
European Patent Office
Office européen des brevets

(11) **EP 3 741 559 A1**

(12) **EUROPEAN PATENT APPLICATION**
published in accordance with Art. 153(4) EPC

(43) Date of publication:
**25.11.2020 Bulletin 2020/48**

(21) Application number: **18901550.6**

(22) Date of filing: **25.12.2018**

(51) Int Cl.:
**B32B 27/06** (2006.01)   **B05D 3/10** (2006.01)
**B05D 7/24** (2006.01)

(86) International application number:
**PCT/JP2018/047555**

(87) International publication number:
**WO 2019/142616 (25.07.2019 Gazette 2019/30)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **16.01.2018 JP 2018004908**

(71) Applicants:
• **Taiyo Manufacturing Co., Ltd.**
  **Osaka-shi, Osaka 535-0013 (JP)**
• **Okuno Chemical Industries Co., Ltd.**
  **Osaka-shi, Osaka 541-0045 (JP)**

(72) Inventors:
• **ARIMITSU Yasushi**
  **Osaka-shi, Osaka 535-0013 (JP)**
• **OKANO Kazuyuki**
  **Osaka-shi, Osaka 535-0013 (JP)**
• **SHIMAHASHI Katsumasa**
  **Osaka-shi, Osaka 538-0044 (JP)**
• **KONUMA Taro**
  **Osaka-shi, Osaka 538-0044 (JP)**
• **KATO Takashi**
  **Osaka-shi, Osaka 538-0044 (JP)**

(74) Representative: **Uexküll & Stolberg
Partnerschaft von
Patent- und Rechtsanwälten mbB
Beselerstraße 4
22607 Hamburg (DE)**

(54) **SILICA-COATED DEPOSIT LAYER FORMED BY PLATING**

(57)     Improved plating is provided. The present invention provides a plated product which comprises a base, a deposit layer formed by plating on a surface of the base, and a silica-compound-containing coating layer formed on the surface of the deposit layer. The coating layer has a thickness of 0.1-100 $\mu$m, preferably 0.1-20 $\mu$m, more preferably 0.1-10 $\mu$m, even more preferably 0.1-5 $\mu$m. The coating layer may contain a dye and/or a pigment.

EP 3 741 559 A1

**Description**

[Technical Field]

The present invention is related to a silica-coated plating layer, especially directed to a product having a silica-coated plating layer, and provides a preparation method thereof.

[Background Art]

In order to lighten an interior part and an exterior part of an automobile, a part formed with a resin such as an ABS resin or polyamide resin is used. In addition, in order to impart luxurious feel and aesthetic to the part, plating is applied to the surface thereof.

For example, Japanese Laid-Open Publication No. 2005-231219 (Patent Literature 1) discloses a plated resin mold body for an automobile part that has a metal plating layer at the surface of a thermoplastic resin mold body. In addition, Japanese Laid-Open Publication No. 2002-241948 (Patent Literature 2) discloses plated members made of a synthetic resin for vehicles such as a lock release lever and an operation knob of an automobile.

Regarding the plating layer on the surface of these members, in order to maintain beauty in the appearance thereof, for example, Japanese Laid-Open Publication No. 2015-221528 (Patent Literature 3) suggests the technique of imparting resistance against stain due to a fingerprint (hereinafter, referred to as "fingerprint resistance") by applying fluorine coating with water repellency and oil repellency to the plated surface. In addition, as another method for maintaining beauty in the appearance, prevention of physicochemical change and/or damage in a plating layer is also required.

Furthermore, although a plating layer on a surface exhibits an aesthetic by itself, because of the custom-made orientation of recent years, it is required to make fine adjustments of texture and color tone without impairing the aesthetic of the plating layer itself.

[Citation List]

[Patent Literature]

[PTL 1] Japanese Laid-Open Publication No. 2005-231219
[PTL 2] Japanese Laid-Open Publication No. 2002-241948
[PTL 3] Japanese Laid-Open Publication No. 2015-221528

[Summary of Invention]

[Solution to Problem]

The inventors discovered that improvement in various characteristics including improvement in fingerprint resistance, enhancement of resistance against physicochemical change and/or damage can be obtained by applying silica-coating to a plating layer (for example, plating layer on a substrate), and discovered that this silica-coating has high stability by strongly adhering with a plating layer. Furthermore, it was discovered that silica-coating is very preferable for adjusting the color tone of a plating layer.

Based on these findings, the present invention provides a silica-coated plating layer (for example, plating layer on a substrate) and the manufacturing method thereof.

Therefore, the present invention provides the following items.

(Item A1)
A plated product comprising:

a substrate made of resin;
a plating layer formed on a surface of the substrate; and
a coating layer comprising a silica compound, which is formed on a surface of the plating layer.

(Item A2)
The plated product of item A1, wherein a thickness of the coating layer is 0.1 to 20 $\mu$m.
(Item A3)

The plated product of item A1, wherein a thickness of the coating layer is 0.1 to 10 $\mu$m.
(Item A4)
The plated product of item A1, wherein a thickness of the coating layer is 0.1 to 5 $\mu$m.
(Item A5)
The plated product of any one of items A1 to A4, wherein the coating layer comprises at least one of a dye and a pigment.
(Item A6)
The plated product of any one of items A1 to A5, wherein the coating layer comprises an added resin.
(Item A7)
The plated product of any one of items A1 to A6, which is for a vehicle.
(Item A8)
A method of manufacturing a plated product comprising:

> a step of forming a plating layer on a surface of a substrate made of resin; and
> a step of applying a coating agent comprising a silica compound to a surface of the plating layer to form a coating layer.

(Item A9)
A method of manufacturing of item A8, comprising a step of carrying out plasma treatment, acid treatment, or alkali treatment to a formed plating layer before the step of forming a coating layer.
(Item A10)
The method of manufacturing of item A8 or A9, wherein a thickness of the coating layer is 0.1 to 20 $\mu$m.
(Item A11)
The method of manufacturing of item A8 or A9, wherein a thickness of the coating layer is 0.1 to 10 $\mu$m.
(Item A12)
The method of manufacturing of item A8 or A9, wherein a thickness of the coating layer is 0.1 to 5 $\mu$m.
(Item A13)
The method of manufacturing of any one of items A8 to A12, wherein the coating agent comprises an added resin.
(Item A14)
The method of manufacturing of any one of items A8 to A13, wherein the product is a product for a vehicle or an electronic product for a household.
(Item 1)
A plated product comprising:

> a substrate made of resin;
> a plating layer formed on a surface of the substrate; and
> a coating layer comprising a silica compound, which is formed on a surface of the plating layer.

(Item 2)
The plated product of item 1, wherein a thickness of the coating layer is 0.1 to 20 $\mu$m.
(Item 3)
The plated product of item 1, wherein a thickness of the coating layer is 0.1 to 10 $\mu$m.
(Item 4)
The plated product of item 1, wherein a thickness of the coating layer is 0.1 to 5 $\mu$m.
(Item 5)
The plated product of any one of items 1 to 4, wherein the coating layer comprises at least one of a dye and a pigment.
(Item 6)
The plated product of any one of items 1 to 5, wherein the coating layer comprises an added resin.
(Item 7)
The plated product of any one of items 1 to 6, which is for a vehicle.
(Item 8)
A method of manufacturing a plated product comprising:

> a step of forming a plating layer on a surface of a substrate made of resin; and
> a step of applying a coating agent comprising a silica compound to a surface of the plating layer to form a coating layer.

(Item 9)

A method of manufacturing of item 8, comprising a step of carrying out acid or alkali treatment to a formed plating layer before the step of forming a coating layer.

(Item 10)
The method of manufacturing of item 8 or 9, wherein a thickness of the coating layer is 1 to 20 $\mu$m.
(Item 11)
The method of manufacturing of item 8 or 9, wherein a thickness of the coating layer is 1 to 10 $\mu$m.
(Item 12)
The method of manufacturing of item 8 or 9, wherein a thickness of the coating layer is 3 to 5 $\mu$m.
(Item 13)
The method of manufacturing of any one of items 8 to 12, wherein the coating agent comprises an added resin.
(Item 14)
The method of manufacturing of any one of items 8 to 13, wherein the product is a product for a vehicle.

The present invention is intended so that one or more of the aforementioned features can be provided not only as the explicitly disclosed combinations, but also as other combinations thereof. Additional embodiments and advantages of the present invention are recognized by those skilled in the art by reading and understanding the following detailed descriptions, as needed.

[Advantageous Effects of Invention]

According to the present invention, it is possible to obtain a plated product having excellent electrical resistance/insulation, excellent fingerprint resistance, resistance against physicochemical change and/or damage and/or corrosion resistance without impairing the metal texture by applying silica-coating to the surface of a plating layer (for example, plating layer on a substrate). In addition, according to the present invention, the appearance (especially texture and color tone) of a plated product can be finely adjusted by silica-coating. The characteristic of being able to finely adjust the appearance may be especially useful in a part for an automobile or the like that requires a small adjustment in design.

[Description of Embodiments]

The present invention is explained below while showing the best embodiment. It should be understood that the terms used in the present specification are used in the meanings that are generally used in the subject field unless specifically referred to. Therefore, unless defined otherwise, all technical terms and scientifically technical terms used in the present specification have the same meaning as the terms generally understood by those skilled in the art of the field to which the present invention belongs. When there is contradiction, the present specification (including definition) is prioritized.

The details of the present invention are explained below.

The present invention relates to a plating layer on whose surface a silica-coating layer is formed. Herein, the plating layer is formed on a substrate such as a resin.

(Substrate)

The silica-coating plating of the present invention is applied on a substrate. The substrate can be a substrate of any material such as a substrate made of metal or a substrate made of glass, and the substrate is preferably made of resin, or a portion made of resin in the article. A substrate made of resin may be a substrate manufactured with any kind of resin as long as the resin is a resin having the characteristics of strength, impact resistance and that like that are necessary for the usage of the substrate. The present specification calls a resin used in a substrate on which silica-coating plating is to be or has been applied a "resin for a substrate". A resin for a substrate includes, for example, but not limited to, AS resin, ABS resin, acrylic resin, polycarbonate resin, polyethylene terephthalate resin, polybutyrene terephthalate resin, polypropylene resin, polyamide resin, polymethyl methacrylate resin, polyallyl diglycol carbonate resin. Any suitable resin used in the subject technical field can be used. Among the above, ABS resin, polycarbonate resin, polyamide resin, or the like is preferable. Typically, the substrate made of resin of the present invention can be a mold article injection molded from these resins. A substrate manufactured with these resins is generally softer than a substrate made of metal and is easy to be degenerated/deformed. A substrate may be transparent or opaque, and may be colored or not colored.

The substrate in the present invention may be an integrally molded substrate, or may be a substrate consisting of two or more different members by two-color molding or the like. For example, when a membrane consists of two or more different members, the substrate may consist of a plated member and an unplated member, and may consist of a transparent member and an opaque member, or a transparent member and a colored member.

The present invention can arbitrarily change the roughness (arithmetic average surface roughness) of a substrate surface in accordance with the usage and design of a product. For example, when brightness is needed to be reduced without imparting gloss to the surface of a product, the degree of unevenness of the surface of a substrate is made larger, while on the other hand, when gloss is imparted to the surface of a product, the degree of unevenness of the substrate surface is made smaller.

Although arithmetic average surface roughness may arbitrarily change in accordance with the usage and design of a product, the arithmetic average surface roughness of a substrate is generally 0.03 to 1.0 $\mu$m. When expression of gloss in a product surface is intended, the arithmetic average surface roughness of a substrate will be smaller, and when pearskin (matte) is attempted to be expressed in a product surface, the arithmetic average surface roughness of a substrate will be larger. Arithmetic average surface roughness can be measured using a stylus type surface roughness meter.

(Plating layer)

A plating layer is formed on a surface of the above-described substrate. A plating layer may be formed by a conventional method. A plating layer may be formed throughout a substrate, or may be formed on one portion. Different plating layers may be formed for each portion of a substrate, or the same plating layer may be formed. A plating layer may be a plating layer of various metal types, or may be made of an alloy. The metal type that can be used in the plating layer of the present invention includes, but not limited to, aluminum (Al), magnesium (Mg), cobalt (Co), nickel (Ni), chrome (Cr), copper (Cu), silver (Ag), tin (Sn), zinc (Zn), iron (Fe), gold (Au) and the like, or may be an alloy of any of these metal types. A plating layer or a portion of a plating layer may be a single layer, or a plurality of layers. When a plating layer or a portion of a plating layer is configured from a plurality of layers, a metal configuring the layers may be different for every layer, or the same.

In one embodiment, a plating layer can be a single layer. In one embodiment, a plating layer can consist of two layers, which are a base layer and an outer layer. In one embodiment, a plating layer can consist of three layers, which are a base layer, an intermediate layer and an outer layer. In one embodiment, a plating layer can consist of four or more layers. In one embodiment, the metal type of a base layer can be copper, nickel, or an alloy thereof. In one embodiment, the metal type of an intermediate layer can be nickel, tin-nickel, tin-cobalt, tin-copper, or iron-nickel. In one embodiment, the metal type of an outer layer can be chrome, zinc, gold, copper, tin-cobalt, tin-nickel, gold-copper, or any alloy thereof. In one embodiment, another processing such as antique-like plating may be practiced after plating.

The color of an outermost layer of a plating layer would be the color of the plating layer in a product. For example, the color of a chrome plating is normally silver color. Although black color chrome plating is also possible, black color chrome plating is relatively low in stability. The silver color of chrome plating has a luxurious feel and is decoratively preferable.

The membrane thickness of each layer of a plating layer can be arbitrarily set in accordance with the usage or the like of the product.

For example, the membrane thickness of a base plating layer can be 5 to 50 $\mu$m, preferably 15 to 40 $\mu$m. The thickness of a copper plating layer is normally 5 $\mu$m to 50 $\mu$m.

The membrane thickness of an intermediate plating layer is preferably 5 to 50 $\mu$m, more preferably 5 to 20 $\mu$m.

The membrane thickness of a plating layer on the outer side is preferably 0.05 to 3.0 $\mu$m. When a plating layer on the outer side is formed with a trivalent chrome, the membrane thickness thereof is preferably 0.1 to 0.3 $\mu$m. When forming with a hexavalent chrome, the membrane thickness thereof is preferably 0.1 to 3.0 $\mu$m or 0.1 to 1.5 $\mu$m, and an especially preferable membrane thickness is 0.1 to 0.5 $\mu$m.

A plating layer is, for example, formed on a surface of a substrate through the (a) electroless nickel plating step and the (b) electroplating step.

(a) Electroless nickel plating step

First, a substrate is water washed and a metal plating layer is formed on the surface thereof by electroless nickel plating (chemical plating). Electroless plating can be carried out in the following manner.

Etching step:

After immersing the substrate in an aqueous solution of chromic anhydride and sulfuric acid at a predetermined temperature, the substrate is water washed and the surface is roughened. Herein, the predetermined temperature can be 60 to 75°C.

Catalyst (catalyzer) step:

After immersing the substrate in an aqueous solution of palladium chloride, stannous chloride and hydrochloric acid, the substrate is water washed and the substrate surface is caused to adsorb palladium.

Accelerator step:

The substrate is immersed in an aqueous solution of hydrochloric acid and water washed and the tin adsorbed together with the palladium in the catalyst step is dissolved/removed with hydrochloric acid.

(b) Electroplating step

Next, electroplating can be carried out on an electroless plating layer in the following manner. As described below, after carrying out copper plating, nickel plating, chrome plating, or chrome alloy plating can be carried out.

First, a copper plating layer is formed on the surface of the electroless plating layer by electroplating.

The copper plating conditions can be, for example, as described below. In a copper sulfate bath of copper sulfate with the concentration of 60 to 250 g/l and sulfuric acid with the concentration of 80 to 200 g/l, a part is immersed at 10 to 30°C and plating is carried out at the cathode current density of 0.5 to 5 A/dm$^2$.

Next, a nickel layer is formed on the surface of the copper plating layer by electroplating. In other words, after immersing the part in a mixed liquid comprising nickel sulfate, nickel chloride, boric acid, gloss agent, treatment is carried out with the cathode current density of 0.5 to 5 A/dm$^2$ and then the part is water washed and a coat of nickel is formed on the surface of the part.

Next, a chrome layer or a chrome alloy layer is formed on the surface of the nickel layer by electroplating. The composition of a plating liquid can use at least one of, for example, chromium sulfate (trivalent), chromium acetate (trivalent), chromium nitrate (trivalent), chromium chloride (trivalent), chromium biphosphate (trivalent) and the like.

(Coating layer)

A coating layer comprising a silica compound (also referred to as "silica-coating layer" in the present specification) is formed on the surface of the plating layer described above by applying a coating agent comprising the silica compound. A coating layer may be applied throughout a plating layer, or may be applied to only one portion. A coating layer comprising a silica compound alone may be formed, or another coating layer may be formed on a plating layer. Different coating layers may be formed for each portion of a plating layer. In a preferable embodiment, a coating layer is applied so as to form a continuous film. In such an embodiment, it is possible to effectively prevent contact of a substance from outside to a layer (for example, plating layer) below a coating layer, wherein good corrosion resistance can be achieved.

The thickness of a coating layer can be 0.01 to 100 $\mu$m or 0.05 to 100 $\mu$m, preferably can be 0.05 $\mu$m to 20 $\mu$m, 0.05 to 15 $\mu$m, 0.1 $\mu$m to 20 $\mu$m, or 0.1 to 15 $\mu$m, more preferably 0.1 to 1.0 $\mu$m, further preferably can be 0.1 to 5 $\mu$m. In one embodiment, the thickness of a coating layer can be 1 to 20 $\mu$m, 1 to 15 $\mu$m, 1 to 10 $\mu$m, 2 to 7 $\mu$m, or 3 to 5 $\mu$m. For example, when a coating layer with the thickness of 5 $\mu$m is attempted to be applied, although it depends on the article, there can be a case wherein there is variation of thickness of about $\pm 2$ $\mu$m, which variation can affect the appearance of the article. Meanwhile, when a coating layer with the thickness of 0.5 $\mu$m or less is attempted to be applied, variation can be controlled to be less than $\pm 2$ $\mu$m and an excellent aesthetic can be achieved by retaining the uniformity of the appearance. In one embodiment, when the target thickness of a coating layer is thin (for example, about 0.1 $\mu$m), it may be possible to form a thin coating layer that is excellent in uniformity by having a very low viscosity in a coating agent. According to the present invention, a silica-coating layer is hard and thus sufficient resistance (protection effect) against physical change/damage (scratch, dent, or the like) can be obtained even when the silica-coating layer is thin. In addition, a silica-coating layer can also have resistance (protection effect) against chemical change/damage such as rust, and can exhibit excellent electrical resistance/insulation.

A silica-coating layer itself can be transparent and it may be possible to maintain the texture and/or color tone of a plating layer thereunder.

In one embodiment, a silica compound comprised in a coating agent is a compound represented by a general formula (I):

$$(R^1)_m Si(OR^2)_{4-m} \qquad (I)$$

<In the formula, R$^1$ represents a functional group or lower alkyl group, R$^2$ represents a lower alkyl group, each R$^1$ and each R$^2$ is independently selected, and m is an integral number of 0 to 3.>

In the above-described general formula (I), the functional group represented by R[1] includes, for example, vinyl, ester (ester of lower alcohol and lower carboxylic acid, or the like), aromatic group such as phenyl, 3-glycidoxypropyl, 3-glycidoxypropylmethyl, 2-(3,4-epoxycyclohexyl)ethyl, p-styryl, 3-methacryloxypropyl, 3-methacryloxypropylmethyl, 3-acryloxypropyl, 3-aminopropyl, N-2-(aminoethyl)-3-aminopropyl, N-2-(aminoethyl)-3-aminopropylmethyl, 3-triethoxysilyl-N-(1,3-dimethylbutylidene)propylamine, N-phenyl-3-aminopropyl, N-(vinylbenzyl)-2-aminoethyl-3-aminopropyl, tris-(trimethoxysilylpropyl)isocyanurate, 3-ureidopropyl, 3-mercaptopropyl, 3-mercaptopropylmethyl, bis(triethoxysilylpropyl)tetrasulphide, 3-isocyanatepropyl, 3-propylsuccinic acid anhydride, and the like.

In the general formula (I) described above, the lower alkyl group represented by R[1] or R[2] includes, for example, a linear, branched, or cyclic alkyl group with the carbon number of about 1 to 6 such as methyl, ethyl, n-propyl, isopropyl, n-butyl, isobutyl, tert-butyl, sec-butyl, n-pentyl, 1-ethylpropyl, isopentyl, neopentyl, hexyl, wherein a part of these groups may be unsaturated.

Specific examples of silica compounds represented by the general formula (I) described above can include $Si(OCH_3)_4$, $Si(OCH_2CH_3)_4$, $CH_3Si(OCH_3)_3$, $CH_3Si(OCH_2CH_3)_3$, $CH_3CH_2Si(OCH_3)_3$, $CH_3CH_2Si(OH_2CH_3)_3$, $CH_2CHSi(OCH_3)_3$, $CH_2CHOCH_2OCH_2CH_2CH_2Si(OCH_3)_3$, $CH_2C(CH_3)COOCH_2CH_2CH_2Si(OCH_3)_3$, $CH_2CHCOOCH_2CH_2CH_2Si(OCH_3)_3$, $NH_2CH_2CH_2CH_2Si(OCH_3)_3$, $HSCH_2CH_2CH_2Si(CH_3)_3$, $OCNCH_2CH_2CH_2Si(OCH_2CH_3)_3$.

A coating agent may comprise an untreated silica compound, or may comprise a silica compound that was hydrolyzed and polymerized beforehand. In the present specification, "silica compound" is used in the meanings of both silica compound of a monomer and polymerized silica compound. An alkoxysilane oligomer is formed by progression of hydrolysis and polymerization reaction of a silica compound after using a coating agent. In one embodiment, after applying a coating agent to a plating layer, the coating agent can be cured by the polymerization reaction of a silica compound. Polymerization reaction of a silica compound includes, for example, addition polymerization and dehydration condensation. In addition, condensation reaction between a silica compound and a plating layer can progress in parallel with the polymerization reaction between silica compounds. In a preferable embodiment, a silica compound can polymerize by dehydration condensation and bind with a plating layer via dehydration condensation reaction with an OH group on the plating layer.

The polymerization degree of a silica compound is not particularly limited and can be a polymerization degree that does not inhibit its application to a plating layer. For example, a silica compound of the weight average molecular weight of about 1000 to 10000 can be used but not limited to this.

A coating agent preferably comprises a silica compound of 1 to 10 wt %.

A coating agent may comprise a solvent. It is possible to use any suitable solvent that distributes the ingredient comprised in a coating agent, and the solvent includes, for example, a solvent that is alcohol-based, glycol-based, glycol ether-based, ether-based, ether alcohol-based, ketone-based, hydrocarbon-based, ester-based, and the like.

A coating agent may comprise one or more types of dye and/or pigment. A dye and/or pigment preferably does not impair the texture/fine sight of a plating layer. A coating agent that comprises a dye and/or pigment can be transparent. In one embodiment, a coating agent can have electrical resistance and/or insulation.

A dye and/or pigment includes, for example, but not limited to, salts (for example, sodium salt) of colorant acid comprising an acidic group such as sulfone group or carboxyl group, which are, for example, acidic colorants such as brilliant blue; dyes such as dyes that are azo-based, anthraquinone-based and indigo-based; organic pigments such as azolake, insoluble azo, condensed azo, quinacridone and phthalocyanine; and inorganic dyes such as titanium oxide, red iron oxide, red lead, chrome yellow, zinc yellow, ultramarine, dark blue, carbon black, graphite and iron oxide black. It is possible to use any suitable dye and/or pigment used in the subject technical field.

The ratio of the dye and/or pigment in a coating agent can be 0.01 to 10 wt %. Such content of dye and/or pigment enables supplemental coloring without impairing the texture/fine sight of a plating layer.

A coating agent may comprise an added resin. In the present specification, "added resin" refers to a resin that was added or is to be added to a coating agent. An added resin can be, for example, those of materials including, but not limited to, acrylic, urethane, epoxy, polyester and melamine. In one preferable embodiment, an added resin is an acrylic resin. In one embodiment, an added resin comprises a core of said materials and an alkoxysilyl group on the surface of the core. In one embodiment, an alkoxysilyl group on the surface of a core is represented by:

$$\text{Core-L-Si}(R^1)_m(OR^2)_{3-m} \qquad (II)$$

<In the formula, R[1] represents a functional group or lower alkyl group, R[2] represents a lower alkyl group, each R[1] and each R[2] are independently selected, L is oxygen or absent, and m is an integral number of 0 to 3.>

In the above-described general formula (II), the functional group represented by R[1] includes, for example, vinyl, ester (ester of lower alcohol and lower carboxylic acid, or the like), aromatic group such as phenyl, 3-glycidoxypropyl, 3-glycidoxypropylmethyl, 2-(3,4-epoxycyclohexyl)ethyl, p-styryl, 3-methacryloxypropyl, 3-methacryloxypropylmethyl, 3-acryloxypropyl, 3-aminopropyl, N-2-(aminoethyl)-3-aminopropyl, N-2-(aminoethyl)-3-aminopropylmethyl, 3-triethoxysilyl-N-(1,3-dimethylbutylidene)propylamine, N-phenyl-3-aminopropyl, N-(vinylbenzyl)-2-aminoethyl-3-aminopropyl, tris-(trimethoxysilylpropyl)isocyanurate, 3-ureidopropyl, 3-mercaptopropyl, 3-mercaptopropylmethyl, bis(triethoxysilylpropyl)tetrasulphide, 3-isocyanatepropyl, 3-propylsuccinic acid anhydride, and the like.

In the general formula (II) described above, the lower alkyl group represented by $R^1$ or $R^2$ includes, for example, a linear or branched alkyl group with the carbon number of about 1 to 6 such as methyl, ethyl, n-propyl, isopropyl, n-butyl, isobutyl, tert-butyl, sec-butyl, n-pentyl, 1-ethylpropyl, isopentyl, neopentyl, hexyl.

In one embodiment, an alkoxysilyl group on the surface of a core is what wherein said silica compound is polymerized to the alkoxysilyl group of the general formula (II) described above.

The ratio of an added resin in a coating agent can be 10 to 30 wt %. A coating agent can bind to a plating layer even stronger by comprising an added resin.

A coating agent may comprise water. The content of water is not specifically limited, and can be about 1 to 10 wt % relative to the coating agent.

A coating agent may comprise a catalyst component. Acid, base, organic metal compound, or the like can be used as a catalyst component.

An acid includes, for example, inorganic acids such as hydrochloric acid, nitric acid, sulfuric acid, phosphoric acid and boric acid; and organic acids such as formic acid, acetic acid, citric acid, oxalic acid and sulfonic acid.

A base includes, for example, hydroxides of an alkali metal or an alkali earth metal such as potassium hydroxide and sodium hydroxide; and amine compounds such as primary amine such as monomethylamine, secondary amine such as diethylamine, tertiary amine such as triethylamine, ammonia, pyridine, and pyrimidine.

An organic metal compound includes, for example, watersoluble organic metal chelate compounds or metal alkoxides containing metal components such as titanium, zirconium, aluminium, tin, and the like.

An organic metal chelate compound includes, for example, titanium chelate compounds such as titanium diisopropoxy bisacetylacetonate, titanium tetra acetylacetonate, titanium dioctyloxybisethyl acetoacetonate, titanium octylene glycolate, titanium diisopropoxy bisethylacetylacetonate, titanium lactate, titanium lactate ammonium salt and titanium diisopropoxy bistriethanolaminate; zirconium chelate compounds such as zirconium tetra acetylacetonate, zirconium tributoxy monoacetyl acetonate, zirconium dibutoxy bisethylacetoacetate and zirconium tributoxy monostearate; aluminum chelate compounds such as ethylacetoacetate aluminum diisopropylate, aluminum tris ethyl acetate, alkyl acetoacetate aluminum diisopropylate and aluminum monoacetylacetonate bisethylacetoacetate; and the like.

A metal alkoxide includes, for example, titanium alkoxide compounds such as tetraisopropyl titanate, tetranormalbutyl titanate, butyl titanate dimer, tetra tertiary butyl titanate and tetraoctyl titanate; zirconium alkoxide compounds such as normal propyl zirconate and normal butyl zirconate; aluminum alkoxide compounds such as aluminum isopropylate, monobutoxy aluminum diisopropylate and aluminum butyrate; and the like.

Regarding the above-described catalyst components, one type may be used alone, or two types or more may be used in combination.

The content of a catalyst component is not specifically limited, and can be about 0.01 to 20 wt %, preferably about 0.1 to 10 wt %, relative to a coating agent.

A coating agent may comprise colloidal silica. Colloidal silica is a dispersion body wherein spherical silica particles or spherical silica particles in the form of chains are dispersed in a solvent. Colloidal silica acts as a membrane formation assistant, which can enhance rust prevention ability of a silica coating by mixing it with a coating agent.

Silica particles in colloidal silica may be a ultrafine particles in the order of nanometer, which, for example, preferably has the average particle size of about 10 to 200 nm, more preferably about 10 to 100 nm. In addition, the particle size of silica particles can be measured by transmission electron microscope (TEM) observation, a measurement method using a conversion value from a specific surface area measurement value (JIS Z8830) by the BET absorption method, or the like, wherein an average particle size can be calculated by averaging the particle size of each particle.

In accordance with the type of the dispersion medium, colloidal silica is classified into water-based colloidal silica wherein water is the dispersion medium, and solvent-based colloidal silica wherein organic solvent is the dispersion medium. Either colloidal silica may be used.

In accordance with the liquidity, water-based colloidal silica is classified into alkaline type and acidic type, and either type may be used. Acidic type colloidal silica is preferable because the stability of a treatment liquid can be retained.

An organic solvent which is a dispersion medium of a solvent-based colloidal silica includes, for example, methanol, isopropanol, dimethylacetamide, ethylene glycol, ethylene glycol mono-n-propyl ether, ethylene glycol monoethyl ether, ethyl acetate, propyleneglycol monoethyl ether acetate, methyl ethyl ketone, methyl isobutyl ketone, toluene, hexane, and the like.

The concentration of silica particles in colloidal silica is not specifically limited, and can be, for example, about 5 to 40 wt %.

The mixing amount of colloidal silica in a coating agent can be mixed so that the concentration of a solid content including a silica particle would be about 1 to 50 wt %, preferably mixed so that the concentration of a solid content including a silica particle would be about 1 to 30 wt %.

The total concentration of the silica compound and the silica particles in a coating agent is preferably set to be about 0.1 to 50 wt %, more preferably set to be about 5 to 40 wt %.

A coating agent may comprise a lubricant. A lubricant that can reduce friction coefficient of a coating layer to be formed can be used. A lubricant include, for example, solid lubricants such as metal dusts such as silver, copper and lead, graphite, molybdenum disulfide, organic molybdenum, and fine powder wax; semisolid lubricants such as grease; liquid lubricants such as silicone oil; and the like. Preferable lubricant is fine powder wax or silicone oil.

A fine powder wax can be a wax of fine powder having a particle size that is less than the membrane thickness of a siliceous film formed on the surface of a treated object, wherein it is preferable that the fine powder wax is, for example, a fine powder wax that has the particle size of about 0.01 to 10 μm, for example, about 0.01 to 5 μm, about 0.01 to 1 μm, about 0.01 to 0.1 μm, about 0.02 to 5 μm, about 0.02 to 1 μm, or about 0.03 to 0.1 μm. Such fine powder wax includes, for example, amide wax, paraffin wax, carnauba wax, lanolin wax, polytetrafluoroethylene wax, polyethylene wax, polypropylene wax, and the like. The treatment liquid of the present invention may comprise a mixture of two or more types of these fine powder waxes.

Silicone oil is a linear polymer comprising a siloxane bond, which is classified into dimethyl silicone oil wherein the side chains and terminals are all methyl groups and modified dimethyl silicone oil wherein an organic group or hydrogen atom is introduced to a side chain or a terminal. Either type can be used as the dimethyl silicone oil that is to be mixed in the coating agent of the present invention.

Furthermore, in accordance with the organic group or hydrogen atom introduced to a side chain and/or terminal, modified dimethyl silicone oil is classified into non-reactive modified dimethyl silicone oil and reactive modified dimethyl silicone oil. The dimethyl silicone oil that is to be mixed in the coating agent of the present invention can be of either type, and from the viewpoint of forming a uniform coating agent, reactive modified dimethyl silicone oil is more preferable.

Non-reactive modified dimethyl silicone oil includes, for example, polyether modified dimethyl silicone oil, aralkyl modified dimethyl silicone oil, fluoroalkyl modified dimethyl silicone oil, long chain alkyl modified dimethyl silicone oil, higher fatty acid ester modified dimethyl silicone oil, higher fatty acid amide modified dimethyl silicone oil, higher fatty acid modified dimethyl silicone oil, phenyl modified dimethyl silicone oil, polyether/methoxy modified dimethyl silicone oil, polyether/long chain alkyl/aralkyl modified dimethyl silicone oil, long chain alkyl/aralkyl modified dimethyl silicone oil, and the like.

Reactive modified dimethyl silicone oil includes, for example, amino modified dimethyl silicone oil, monoamine modified dimethyl silicone oil, diamine modified dimethyl silicone oil, epoxy modified dimethyl silicone oil, alicyclic epoxy modified dimethyl silicone oil, carbinol modified dimethyl silicone oil, mercapto modified dimethyl silicone oil, carboxyl modified dimethyl silicone oil, hydrogen modified dimethyl silicone oil, amino/polyether modified dimethyl silicone oil, epoxy/polyether modified dimethyl silicone oil, epoxy/aralkyl modified dimethyl silicone oil, methacryl modified dimethyl silicone oil, acrylic modified dimethyl silicone oil, phenol modified dimethyl silicone oil, silanol modified dimethyl silicone oil, carboxylic acid anhydride modified dimethyl silicone oil, diol modified dimethyl silicone oil, and the like.

Normally, the mixing amount of a lubricant comprised in a coating agent can be set to be about 0.01 to 30 wt %, preferably about 0.1 to 20 wt %, based on the total amount of a coating agent.

The mixing amount of a lubricant comprised in a coating agent may be determined in accordance with the total amount of solution comprising a silica compound and colloidal silica comprised in the coating agent. For example, a lubricant can be about 0.01 to 100 mass parts, preferably about 0.1 to 50 pass parts, with respect to 100 mass parts of a solution comprising a silica compound and colloidal silica.

In one embodiment, a coating agent comprising a silica compound, added resin, organic metal compound and solvent can be suitably used. In one embodiment, a coating agent further comprising dye and/or pigment can be suitably used. A combination of a silica compound, added resin, organic metal compound and solvent that can be suitably used in such a coating agent includes, for example, 10 wt % of silica compound, 20 wt % of added resin, 5 wt % of organic metal compound, and 65 wt % of solvent, wherein in one embodiment, the added resin is an acrylic resin.

In the present invention, the method for forming a coating layer on the surface of a plating layer is not specifically limited, for example, a coating agent comprising a silica compound can be applied to the surface of a plating layer. A known method can be employed as the method for applying a coating agent to the surface of a plating layer. For example, the spin coat printing method, dip coat method, silk printing method, pad printing method, spray coat method, roll coat method, and the like are included.

In one embodiment, after carrying out plasma treatment, acid treatment, or alkali treatment to the surface of a plating layer, a coating agent is applied to the surface of the plating layer. By carrying out plasma treatment, acid treatment, or alkali treatment, an OH group is formed on a plating layer surface of chrome, zinc or the like. An acid treatment agent includes, for example, but not limited to, sulfuric acid, nitric acid, acetic acid, hydrofluoric acid, formic acid, oxalic acid, or a combination thereof, more specifically, DP-320 Clean, Topsun, or Topsun NF manufactured by OKUNO CHEMICAL INDUSTRIES, or the like, and an alkali treatment agent includes, for example, but not limited to, ammonia, sodium hydroxide, potassium hydroxide, lithium hydroxide, and salt of sodium, potassium, or lithium and weak acid, more specifically, Ace Clean 850, Ace Clean A-220 manufactured by OKUNO CHEMICAL INDUSTRIES, or the like. A plasma treatment includes a method for directly irradiating plasma discharge generated with a plasma discharge apparatus to the surface of a plating layer.

After applying a coating agent to the surface of a plating layer, heat treatment may be carried out in order to firmly bind a coating layer with the surface of a plating layer and speed up the curing of the coating agent. The heat treatment temperature is determined whilst considering the heat resistant temperature of a substrate, and the heat treatment temperature can be 10 to 100°C. A polymerization method upon curing a silica compound includes, for example, addition polymerization and dehydration condensation, and a dehydration condensation-type silica compound is generally cured at a temperature higher than an addition polymerization-type silica compound. The use of a dehydration condensation-type silica compound is preferable in the present invention, and when a substrate is a resin, the temperature of heat treatment should be adjusted so as not to cause deformation/degeneration of the resin due to high temperature. In order to prevent degeneration of a substrate, the temperature of heat treatment can be less than 100°C. In one embodiment, curing treatment of a coating agent may be set based on the target surface solidity of a coating layer. The time of heat treatment can be about 30 seconds to 30 minutes. A device used upon carrying out heat treatment is not specifically limited. Heat treatment can be carried out using a known device such as a drier or the like.

(Product)

The present invention provides a product wherein a plating layer is formed on a substrate and a silica coating is formed on the plating layer. A product may be a circulating article by itself, or may be a part used in one portion of a circulating article. The silica coating plating of the present invention may be formed throughout a product, or may be formed on one portion of a product.

In one embodiment, a product is a product for outdoors. A product for outdoors is generally used in an environment harsher than a product used indoors, and is easy to be deformed/degenerated. In one embodiment, a product is a product for vehicles. In one embodiment, a product is an electronic product (for example, for households). In one embodiment, a product is a product for automobiles. In one embodiment, a product is a product for decoration and/or for operation of a vehicle (for example, automobile). A product for decoration and/or for operation has many chances of bearing physical burden and is likely to be deformed. Since a luxurious appearance is preferred in a product (especially a product for decoration and/or for operation) for a vehicle (for example, automobile), impartment of fingerprint resistance to a coating layer surface and maintenance of shine or metal gloss of a metal plating is desirable. When a substrate is made of resin, the substrate is softer and easier to deform than a substrate made of metal. Thus, deformation of a substrate easily cause a plating layer applied thereon and a coating layer on the plating layer to exfoliate/crack. In particular, a plating layer and coating layer are both hard and easy to cause exfoliation therebetween, and when exfoliation occurs between plating layer-coating layer, the air that got in between these layers would form another layer and may significantly impair the appearance of a plating coating. However, the inventors unexpectedly discovered that the strength of the binding force of a plating layer and a silica coating layer can reduce generation of such exfoliation/cracking. In addition, the inventors discovered that when a coating layer comprises an added resin, generation of exfoliation/cracking can be further reduced. Although not wishing to be bound by any theory, it is considered that this is due to increased flexibility of a coating layer and due to the acquired ability of dealing with deformation of a substrate by comprising an added resin in the coating layer. Resin with plating is often used in an electrical product for households, and since the coating plating of the present invention can provide electrical resistance/insulation, physicochemical resistance, corrosion resistance, fingerprint resistance and the like, the coating plating can also be suitably used in such a house electrical product (for example, major appliance, cell phone, digital camera, PC, beauty electrical product, or the like). While a plating applied thereon a coating film does not generate a cool feel like a plastic when touched, the plated product of the present invention with silica coating can generate a metallic cool feel when touched, which is an excellent point of the present invention.

The thickness of the coating layer of the present invention can be 0.01 to 100 $\mu$m, or 0.05 to 100 $\mu$m, preferably can be 0.05 to 20 $\mu$m, 0.05 to 15 $\mu$m, 0.1 to 20 $\mu$m, or 0.1 to 15 $\mu$m, more preferably 0.1 to 10 $\mu$m, further preferably can be 0.1 to 5 $\mu$m, and in one embodiment, can be 1 to 20 $\mu$m, 1 to 15 $\mu$m, 1 to 10 $\mu$m, 2 to 7 $\mu$m, or 3 to 5 $\mu$m, and a coating layer with such range of thicknesses can provide strength that is sufficient for protection of a substrate and a plating layer. Furthermore, in such a case in which the thickness of a coating layer is, for example, more than 0.1 $\mu$m, more than 0.2 $\mu$m, more than 0.3 $\mu$m, more than 0.4 $\mu$m, or more than 0.5 $\mu$m, protection effect by the coating can be powerful, and especially when the thickness of a coating layer is 0.5 $\mu$m or more, the thickness can be sufficient for various purposes (for example, impartment of electrical resistance/insulation, impairment of resistance against physicochemical change or damage, impairment of corrosion resistance, and the like). In addition, since the thickness of the coating layer of the present invention is thicker than an extremely thin layer (for example, less than 0.1 $\mu$m) such as a fluorine coating, there is a concern of causing a crack (for example, a crack can occur by contraction upon curing a coating agent or the like), but it was confirmed that generation of a crack is hardly observed with the above-described range of suitable thicknesses. In addition, the thickness of a coating layer can affect the appearance of a coated article.

When a coating layer is thin (for example, about 0.1 to 1 $\mu$m), the texture of a plating layer would hardly be impaired, but especially when the thickness of the coating layer is 5 $\mu$m or less, the metal feel can be maintained in the appearance unlike a general coated part.

Dye and/or pigment may be added to the coating layer of a product for supplemental coloring of a plating layer. The strength of the supplemental coloring effect may change depending on the thickness of a coating layer. Especially a plated product for automobiles is often required to focus on the design and make fine adjustment of color tone. Since the silica coating of the present invention is hard, sufficient physiochemical protection can be obtained even with thin coating layer and a coating layer being thin enables fine adjustment of the color tone of a plating layer, and thus the silica-coated plated substrate of the present invention can be especially useful for a part for automobiles. The thickness of the coating layer of the present invention can be 0.01 to 100 $\mu$m, or 0.05 to 100 $\mu$m, preferably can be 0.05 to 20 $\mu$m, 0.05 to 15 $\mu$m, 0.1 to 20 $\mu$m, or 0.1 to 15 $\mu$m, more preferably 0.1 to 10 $\mu$m, further preferably can be 0.1 to 5 $\mu$m, and in one embodiment, can be 1 to 20 $\mu$m, 1 to 15 $\mu$m, 1 to 10 $\mu$m, 2 to 7 $\mu$m, or 3 to 5 $\mu$m, wherein the coating layer of such range of thicknesses can obtain supplemental coloring effect that is sufficient for a plating layer. Furthermore, in such a case wherein the thickness of a coating layer is, for example, 0.1 $\mu$m or more, 0.2 $\mu$m or more, 0.3 $\mu$m or more, 0.4 $\mu$m or more, or 0.5 $\mu$m or more, the supplemental coloring effect by the coating layer can be exerted even more strongly, and especially a coating layer of the thickness of 0.1 $\mu$m or more can be sufficient for expression of a wide range of color tones, but even when a coating layer with such thickness is applied, the coating layer of the present invention can enable coloring while still maintaining the texture/color tone of a plating layer.

(Fingerprint resistance)

The effect of suppressing impartment of a fingerprint of a coating layer (fingerprint resistance) can be evaluated by measuring the contact angle of the staining substance of a fingerprint to a coating layer. The larger the contact angle, the more excellent the fingerprint resistance is.

The "contact angle" used in the preset specification is an angle made by a liquid surface and a solid surface at a place wherein a free surface of a static liquid contacts a solid wall. The contact angle used in the present specification is a value measured with the $\theta/2$ method.

Upon measurement, it is possible to use oleic acid which is the main component of the stain of a fingerprint as a measurement liquid that becomes a substitution for the stain of a fingerprint. In the present specification, "having fingerprint resistance" refers to a contact angle of when oleic acid is used being 60° or more.

In the silica-coated product of the present invention, the contact angle (oleic acid) is 65° or more, especially preferably 68 to 80°.

In addition, when water is used, good fingerprint resistance is achieved if the contact angle is 90° or more. In the silica-coated product of the present invention, the contact angle (water) is 100° or more, especially preferably 105 to 120°.

(Fingerprint wipe off ability)

In the present invention, "fingerprint wiping ability" is an indicator of the likeliness of a fingerprint remaining on a target surface of when fingerprints is wiped off with a nonwoven fabric gauze after passing 5 or more days since imparting a fingerprint on the target surface.

When a fingerprint remaining on a surface A after wiping off the fingerprint with a nonwoven fabric gauze after passing 5 or more days since imparting the fingerprint to the surface A is less than a fingerprint on a surface B after wiping off the fingerprint with a nonwoven fabric gauze in the same manner after passing the same time period since imparting the fingerprint on the surface B in the same manner, the surface A has an enhanced fingerprint wipe off ability than the surface B.

The silica-coated product of the present invention has an enhanced and significantly excellent fingerprint wipe off ability compared to a product that is not silica-coated. Thus, even when a fingerprint is imparted, the silica-coated product of the present invention can readily wipe off the fingerprint.

(Metal gloss)

In one embodiment, since a coating layer formed on the surface of a plating layer is thin, an uneven state in a substrate surface and the plating layer will not be changed by the coating layer and the shine and/or gloss of the plating layer will not be impaired by the coating layer.

In view of the above, it is possible to provide a coated plated product while maintaining the appearance and design intended to be expressed by the unevenness of a substrate surface.

The metal gloss of the plated product of the present invention can be evaluated by measuring the glossiness of the product surface. The glossiness in the present invention is defined by the following formula.

$$\text{Glossiness} = 2 - \log_{10}(\text{reflection factor})$$

$$\text{Reflection factor} = \text{Reflection light amount/Incident light amount}$$

For the measurement of the glossiness, for example, the Densitometer ND11 manufactured by NIPPON DENSHOKU INDUSTRIES Co., LTD ca be used.

In the present invention, changing percentage (%) of glossiness is shown by the following formula:

$$\text{(Glossiness after impartment of coating} - \text{glossiness before impartment of coating)/glossiness before impartment of coating} \times 100$$

In the silica-coated product of the present invention, the changing percentage of the glossiness is within the range of 30% (-30% to 30%), more preferably within the range of 10% (-10% to 10%), especially preferably within the range of 5% (-5% to 5%).

(Hardness)

The hardness of a substrate, plating layer and silica-coating layer can be measured with the JIS K5600-5-4 scratch hardness (pencil method).

(Adhesion force)

The adhesion force between a substrate and a plating layer and the adhesion force between a plating layer and a silica-coating layer can be measured with the JIS K5600-5-6 attachment ability (crosscut method).

In the present specification, "or" is used when "at least 1 or more" of the matters listed in the sentence can be employed. The same applies to "or". When the present specification explicitly describes "within the range" of "two values", the range includes the two values.

Reference documents cited in the present specification, such as science documents, patents, and patent applications, are incorporated herein by reference in their entirety to an extent that each of which is specifically described.

(Other embodiments)

As discussed above, the present invention has been explained while showing an embodiment preferable for easy understanding. While the present invention is explained below based on the Examples, the above-discussed explanation and the Examples below are provided only for the purpose of exemplification and not provided for the purpose of limiting the present invention. Therefore, the scope of the present invention is not limited by the embodiments and Examples specifically described in the present specification, but only limited by the Claims.

[Examples]

The present invention is further specifically explained by the following Examples. However, the present invention is not limited by the following Examples.

A. Evaluation method of fingerprint resistance

The evaluation of the fingerprint resistance was carried out by measuring a contact angle. The measurement of the contact angle was carried out by using a contact angle meter (manufactured by KYOWA INTERFACE SCIENCE CO., LTD.) to drop a measurement liquid to the surface of a product and measure the contact angle. The targeted measurement liquid was set to be oleic acid which is the main component of the stain of a fingerprint. In addition, a contact angle of when water is used as measurement liquid was also measured.

Furthermore, oleic acid was used to attach a fingerprint to the surface of the product and visual observation was carried out, wherein evaluation was carried out with the following criterion as well.

(Evaluation of fingerprint resistance)

◎ Excellent: Attachment of fingerprint not noticed at all.
○ Good: Attachment of fingerprint hardly noticed.
× Inferior: Attachment of fingerprint noticeable.

B. Measurement of membrane thickness of coating layer

The membrane thickness of the coating layer was measured with a contact-type membrane thickness measurement apparatus (automatic contact angle meter DM-301 manufactured by KYOWA INTERFACE SCIENCE CO., LTD.).

C. Measurement of glossiness

Glossiness was measured using the Densitometer ND11 manufactured by NIPPON DENSHOKU INDUSTRIES Co., LTD.
The measurement of the glossiness was carried out twice, before applying a coating agent to the surface of the plating layer and after application and formation of the coating layer, and the values of glossiness were compared.

D. Hardness evaluation method

The evaluation of hardness was carried out with the JIS K5600-5-4 scratch hardness (pencil method).

E. Adhesion force evaluation method

The evaluation of the adhesion force was carried out with the JIS K5600-5-6 attachment ability (crosscut method).

(Example 1)

(1) ABS resin is used and a part made of synthesized resin was molded by injection molding.

The surface of the obtained part was a smooth surface and the arithmetic average surface roughness was 0.03 μm.

(2) Etching step of the part made of synthesized resin

This part made of synthesized resin was immersed for about 10 minutes in an etching liquid of about 65°C having the following composition to carry out the etching of the surface of the part.

<Etching liquid composition>

Chromic acid about 400 g/dm$^3$
Sulfuric acid about 400 g/dm$^3$

(3) Catalyst step of the part made of synthesized resin

Next, the part made of synthesized resin was immersed for two minutes in a catalyst liquid of about 35°C having the following composition and further immersed for three minutes in an accelerator liquid of 40°C to cause palladium as a metal catalyst nucleus to attach on the roughened surface thereof.

<Catalyst liquid composition>

Palladium chloride about 0.1 g/dm$^3$
Stannous chloride about 10 g/dm$^3$

Hydrochloric acid about 250 dm$^3$/dm$^3$

(4) Electroless metal plating step

Next, the electroless nickel plating bath (30°C) shown below was used to form a nickel plating layer with the thickness of about 0.2 μm.

<Electroless nickel plating composition>

Nickel sulfate about 20 g/dm$^3$
Sodium phosphinate about 10 g/dm$^3$
Citrate about 30 g/dm$^3$

(5) Step of forming electroplating layer

Next, the part was sequentially immersed in the electroplating liquids of the following compositions (a) to (c) to form three layers of electroplating layers to the surface of the electroless plating layer of the part surface.

<Composition of electroplating liquids>

(a) Nickel plating
Nickel sulfate 280 g/dm$^3$
Nickel chloride 50 g/dm$^3$
Boric acid 30 g/dm$^3$
(b) Copper plating
Copper sulfate 200 g/dm$^3$
Sulfuric acid 80 g/dm$^3$
Gloss agent Suitable amount
(c) Chrome plating
Trivalent chrome plating liquid
Envirochrome, Twilight Chrome (manufactured by MACDERMID PERFORMANCE SOLUTIONS JAPAN K.K.), Top Finechrome (manufactured by OKUNO CHEMICAL INDUSTRIES), or the like.

(6) Next, a coating agent was applied to the surface of the plating layer formed in such a manner and a coating layer was formed by carrying out curing treatment at 80°C to obtain a plated product. This coating agent comprised 10 wt % of tetraethoxysilane (silica compound), 20 wt % of acrylic resin (added resin), 5 wt % of titanium diisopropoxybis acetylacetonate (organic metal compound) and 65 wt % of 1-ethoxy-2-propanol (solvent). The membrane thickness of the coating layer was 4 μm which was measured by the contact-type membrane thickness measurement apparatus. The hardness of the coating layer was 3H which was measured by the JIS K5600-5-4 scratch hardness (pencil method), and the adhesion force of the coating layer was class 0 which was measured by the JIS K5600-5-6 attachment ability (crosscut method).

The coating layer was excellent in fingerprint resistance and was not impaired in terms of the texture and aesthetic of the plating layer.

It was found that the coating layer is hard and can prevent physical damage of the plated product. In addition, the coating layer was strongly adhered to the plating layer, being stable without exfoliation or cracking.

(Example 2)

Other than the point that a coating agent further comprises an organic pigment of 0.01 wt % of copper phthalocyanine, a plated product was prepared in the same manner as Example 1. The hardness of the coating layer was 3H which was measured by the JIS K5600-5-4 scratch hardness (pencil method), and the adhesion force of the coating layer was class 0 which was measured by the JIS K5600-5-6 attachment ability (crosscut method).

While supplemental coloring effect of blue color in addition to silver color of the chrome plating was clearly observed in the plated product obtained in this Example, the plated product exhibited texture and fine sight of the chrome plating which are similar to the plated product obtained in Example 1.

Therefore, the plated product of the present invention is excellent in fingerprint resistance, physical resistance and stability, and can also maintain the texture and aesthetic of the plating layer. Furthermore, fine adjustment of color tone can be made while still maintaining the luxurious feel of the plating by carrying out supplemental coloring without impairing the texture and aesthetic of the plating layer.

(Note)

As disclosed above, the present invention is exemplified with its preferred embodiments. However, it is understood that the scope of the present invention should be interpreted solely based on the Claims. It is also understood that any patent, any patent application, and any references cited herein should be incorporated herein by reference in the same manner as the contents are specifically described herein.

[Industrial Applicability]

The plated product of the present invention is suitable for an electronic product (especially for households), a member for decoration, an interior member of an automobile such as a lock release lever or an operation knob of an automobile, exterior member, and the like.

**Claims**

1. A plated product comprising:

    a substrate made of resin;
    a plating layer formed on a surface of the substrate; and
    a coating layer comprising a silica compound, which is formed on a surface of the plating layer.

2. The plated product of claim 1, wherein a thickness of the coating layer is 0.1 to 20 $\mu$m.

3. The plated product of claim 1, wherein a thickness of the coating layer is 0.1 to 10 $\mu$m.

4. The plated product of claim 1, wherein a thickness of the coating layer is 0.1 to 5 $\mu$m.

5. The plated product of any one of claims 1 to 4, wherein the coating layer comprises at least one of a dye and a pigment.

6. The plated product of any one of claims 1 to 5, wherein the coating layer comprises an added resin.

7. The plated product of any one of claims 1 to 6, which is for a vehicle.

8. A method of manufacturing a plated product comprising
    a step of forming a plating layer on a surface of a substrate made of resin; and
    a step of applying a coating agent comprising a silica compound to a surface of the plating layer to form a coating layer.

9. A method of manufacturing of claim 8, comprising a step of carrying out plasma treatment, acid treatment, or alkali treatment to a formed plating layer before the step of forming a coating layer.

10. The method of manufacturing of claim 8 or 9, wherein a thickness of the coating layer is 0.1 to 20 $\mu$m.

11. The method of manufacturing of claim 8 or 9, wherein a thickness of the coating layer is 0.1 to 10 $\mu$m.

12. The method of manufacturing of claim 8 or 9, wherein a thickness of the coating layer is 0.1 to 5 $\mu$m.

13. The method manufacturing of any one of claims 8 to 12, wherein the coating agent comprises an added resin.

14. The method of manufacturing of any one of claims 8 to 13, wherein the product is a product for a vehicle or an electronic product for a household.

EP 3 741 559 A1

## INTERNATIONAL SEARCH REPORT

International application No.

PCT/JP2018/047555

**A. CLASSIFICATION OF SUBJECT MATTER**
Int.Cl. B32B27/06(2006.01)i, B05D3/10(2006.01)i, B05D7/24(2006.01)i

According to International Patent Classification (IPC) or to both national classification and IPC

**B. FIELDS SEARCHED**

Minimum documentation searched (classification system followed by classification symbols)
Int.Cl. B32B1/00-43/00, B05D1/00-7/26

Documentation searched other than minimum documentation to the extent that such documents are included in the fields searched
Published examined utility model applications of Japan     1922-1996
Published unexamined utility model applications of Japan   1971-2019
Registered utility model specifications of Japan           1996-2019
Published registered utility model applications of Japan   1994-2019

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X<br>Y | JP 2013-202818 A (MITSUBISHI PAPER MILLS LIMITED)<br>07 October 2013, claims, paragraphs [0002],<br>[0011]-[0027], [0032], [0036], [0045], [0046]<br>& US 2015/0024215 A1, claims, paragraphs [0002],<br>[0018]-[0035], [0040], [0068], [0069] & WO<br>2013/146293 A1 & KR 10-2014-0135232 A | 1-6, 8-13<br>5, 7, 9, 14 |
| X<br>Y | JP 11-78673 A (KOITO MFG CO., LTD.) 23 March 1999,<br>claims, paragraphs [0001], [0008], [0009], table 1<br>& US 6190028 B1, claims, column 2, line 28 to<br>column 3, line 15, table 1 & CN 1211587 A | 1-8, 10-14<br>5, 7, 9, 14 |

☒ Further documents are listed in the continuation of Box C.　　☐ See patent family annex.

| | |
|---|---|
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search<br>21.01.2019 | Date of mailing of the international search report<br>05.02.2019 |
|---|---|
| Name and mailing address of the ISA/<br>Japan Patent Office<br>3-4-3, Kasumigaseki, Chiyoda-ku,<br>Tokyo 100-8915, Japan | Authorized officer<br><br>Telephone No. |

Form PCT/ISA/210 (second sheet) (January 2015)

**INTERNATIONAL SEARCH REPORT**

International application No.

PCT/JP2018/047555

C (Continuation).    DOCUMENTS CONSIDERED TO BE RELEVANT

| Category* | Citation of document, with indication, where appropriate, of the relevant passages | Relevant to claim No. |
|---|---|---|
| X<br>Y | JP 2003-155580 A (TOYODA GOSEI CO., LTD.) 30 May 2003, claims, paragraphs [0021], [0026], [0027], [0036], [0037], [0044], examples<br>(Family: none) | 1-4, 6-14<br>5, 7, 9, 14 |
| X<br>Y | JP 2004-203014 A (TOYODA GOSEI CO., LTD.) 22 July 2004, claims, paragraphs [0026], [0030], [0032], [0056], [0061], [0068], example 1<br>& US 2004/0086728 A1, claims, paragraphs [0016], [0020], [0022], [0047], [0052], [0059], examples | 1-4, 6-14<br>5, 7, 9, 14 |
| X<br><br>Y | JP 8-225920 A (TOKAI RIKA CO., LTD.) 03 September 1996, claims, paragraphs [0007], [0008]<br>(Family: none) | 1, 2, 6-8, 10, 13, 14<br>5, 7, 9, 14 |

Form PCT/ISA/210 (continuation of second sheet) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2005231219 A
- JP 2002241948 A
- JP 2015221528 A